# EUROPÄISCHE PATENTSCHRIFT

(11) **EP 3 777 054 B1**
(45) Veröffentlichungstag und Bekanntmachung des Hinweises auf die Patenterteilung: **08.06.2022**
(21) Anmeldenummer: 19716120.1
(22) Anmeldetag: 03.04.2019
(51) Int. Cl.: H04L 45/302, H04L 43/0864, H04L 45/12, H04L 45/00

(54) **VERFAHREN ZUM BETREIBEN EINES ETHERNET-BORDNETZES EINES KRAFTFAHRZEUGS, STEUEREINHEIT UND ETHERNET-BORDNETZ**
METHOD FOR OPERATING AN ETHERNET ON-BOARD NETWORK OF A MOTOR VEHICLE, CONTROL UNIT, AND ETHERNET ON-BOARD NETWORK
PROCÉDÉ POUR FAIRE FONCTIONNER UN RÉSEAU DE BORD ETHERNET D'UN VÉHICULE À MOTEUR, UNITÉ DE COMMANDE ET RÉSEAU DE BORD ETHERNET

(30) Priorität: 09.04.2018 DE 102018205264
(43) Veröffentlichungstag der Anmeldung: 17.02.2021
(73) Patentinhaber: Continental Automotive GmbH, 30165 Hannover (DE)
(72) Erfinder: ZINNER, Helge, 81737 München (DE); BRAND, Julian, 81737 München (DE)
(74) Vertreter: Continental Corporation
(86) Internationale Anmeldenummer: PCT/EP2019/058357
(87) Internationale Veröffentlichungsnummer: WO 2019/197233

(56) Entgegenhaltungen:
- WO-A1-2017/215612
- US-A1- 2013 343 747
- HYUNG-TAEK LIM ET AL: "Challenges in a future IP/Ethernet-based in-car network for real-time applications", DESIGN AUTOMATION CONFERENCE (DAC), 2011 48TH ACM/EDAC/IEEE, IEEE, 5. Juni 2011 (2011-06-05), Seiten 7-12, XP031927722, ISBN: 978-1-4503-0636-2

## Beschreibung

Die Erfindung betrifft ein Verfahren zum Betreiben eines Ethernet-Bordnetzes eines Kraftfahrzeugs. Weiterhin betrifft die Erfindung eine Steuereinheit für ein dementsprechendes Ethernet-Bordnetz und ein Ethernet-Bordnetz mit einer dementsprechenden Steuereinheit.

US2013343747A1 offenbart für Telekommunikationsnetze, Kabelfernsehen und Datenkommunikationsnetze ein optical unidirectional path switched ring (OUPSR) Netzwerk.

Die Steuergeräte im Fahrzeugnetzwerk sind heute meist nur durch eine gleichartige Verbindung erreichbar. Eine Redundanz im Kabelbaum gibt es meistens nicht. Zukünftig ist es jedoch vorgesehen, dass aus Gründen der Ausfallsicherheit, Steuergeräten mit redundanten Strom- und Datenverbindungen ausgestattet werden, um im Fehlerfall, beispielsweise einem Kabelbruch oder einem Kontaktfehler im Stecker, noch kommunizieren zu können. Ein Autonetzwerk, insbesondere ein Ethernet-Bordnetz, der Zukunft wird ähnlich zu einem aus anderen Bereichen der Informationstechnologie bekannten Netzwerk stärker vermascht sein.

Es stellt sich dadurch die Frage, welcher Verbindungsweg zwischen Steuereinheiten der Beste für welchen Anwendungsfall, insbesondere im Hinblick auf Latenz, Ausfallsicherheit, EMV (elektromagnetische Verträglichkeit) und Stromübertragung, ist. Die Informationen über die Topologie des Netzwerks und deren Geschwindigkeiten stehen der Software bzw. den Programmen in den Steuergeräten aber bisher nicht zur Verfügung. Ein Programm wird aber zukünftig in sehr vielen unterschiedlichen Bordnetzvarianten Anwendung finden.

Es ist Aufgabe der Erfindung ein Verfahren, eine Steuereinheit sowie ein Ethernet-Bordnetz zu schaffen, bei welchem bzw. mit welcher bzw. mit welchem ein Ethernet-Bordnetz zuverlässiger betrieben werden kann.

Die Aufgabe wird durch ein Verfahren, ein Steuergerät und ein Ethernet-Bordnetz gemäß den unabhängigen Patentansprüchen gelöst.

Nach einem erfindungsgemäßen Verfahren wird ein Ethernet-Bordnetz eines Kraftfahrzeugs betrieben. Es werden folgende Schritte durchgeführt:
- Bestimmen einer Laufzeit oder Verbindungsverzögerung eines ersten Signals auf einem, insbesondere direkten, ersten Verbindungsweg zwischen einer ersten Steuereinheit des Ethernet-Bordnetzes und einer zweiten Steuereinheit des Ethernet-Bordnetzes;
- Bestimmen einer Maximalgeschwindigkeit des ersten Verbindungswegs; und
- Bestimmen einer Art oder physikalisches Medium eines Übertragungsmediums des ersten Verbindungswegs anhand der Verbindungsverzögerung und Maximalgeschwindigkeit.

Der Erfindung liegt die Erkenntnis zugrunde, dass anhand der Laufzeit oder Verzögerung eines Signals auf dem Verbindungsweg eine Maximalgeschwindigkeit des Verbindungswegs bestimmt werden kann und wiederum aus der Verbindungsverzögerung und der Maximalgeschwindigkeit die Art oder physikalisches Medium des Übertragungsmediums bestimmt werden kann. Mit dem Wissen über das Übertragungsmedium kann das Ethernet-Bordnetz zuverlässiger betrieben werden.

So kann einem Programm bzw. einer Software, in einem Steuergerät des Ethernet-Bordnetzes beispielsweise mitgeteilt werden in welcher Art oder physikalisches Medium das Übertragungsmedium ist. Abhängig davon kann das Programm dann beispielsweise entscheiden, welcher Verbindungsweg zur Übertragung von Daten gewählt wird, es kann beispielsweise ein zuverlässigerer Weg oder ein schnellerer Weg gewählt werden. Auch kann beispielsweise abhängig von den zu sendenden Daten entschieden werden, ob diese über einen zuverlässigerer oder einen schnellen Weg gesendet werden sollen. So wird beispielsweise Bildinformation, welche live mit einer Kamera des Kraftfahrzeugs erfasst wird eher mit einer schnellen Verbindung übertragen als mit einer zuverlässigeren Verbindung, da die aktuelle Bildinformation nach einer gewissen Zeit nicht mehr relevant ist bzw. nicht mehr von Interesse für das Programm ist.

Insbesondere wird die Länge des jeweiligen Verbindungswegs bestimmt. Die Art des Übertragungsmediums wird dann insbesondere zusätzlich anhand der Länge des Verbindungswegs bestimmt.

Insbesondere wird das Übertragungsmedium durch Vergleich der Verzögerungszeit und/oder Maximalgeschwindigkeit und/oder der Länge mit Referenzwerten, insbesondere mit einer Referenzverzögerungszeit und/oder Referenzmaximalgeschwindigkeit und/oder mit einer Referenzlänge, bestimmt.

Durch das Verfahren kann die Datenübertragung effizienter erfolgen. Mit der Kenntnis über die Art des Übertragungsmediums bzw. der Kanalparameter kann das Programm, insbesondere Anwendungsprogramm, Betriebssystem oder Firmware, im Hinblick auf Speicherverbrauch, Echtzeitfähigkeit und etwaigen Sicherheitslevel optimiert bzw. dafür ausgelegt werden. Wenn beispielsweise erkannt wird, dass über ein optisches Medium statt über ein Kupfermedium übertragen wird, so können die eigenen Aufwendungen für die Erfüllung der Sicherheitsanforderungen minimiert werden, da die Klasse "optisch" bessere Eigenschaften bezüglich elektromagnetischer Störung aufweist. Dies führt zu einem geringeren Stromverbrauch, da zum Zeitpunkt der Designerstellung üblicherweise vom schlechtesten Fall ausgegangen wird und deshalb mehr Rechenleistung als nötig sicherheitshalber eingeplant wird.

Ein weiterer Vorteil ist die bessere Ressourcennutzung durch das Verfahren. Je nach Übertragungsmedium und Geschwindigkeit kann das Programm Ressourcen freihalten bzw. frühzeitig allokieren wenn beispielsweise erkannt wird, dass aufgrund der Geschwindigkeit eine neue Übertragung zeitlich möglich wäre oder auch nicht, das heißt eine neue Übertragung wäre aufgrund der schnelleren Geschwindigkeit noch innerhalb der definierten maximalen Übertragungszeit möglich. Die jeweilige Steuereinheit bzw. der Controller könnte also je nach Medium sogar Energie einsparen und herunter getaktet werden bzw. auch Ressourcen für andere Anwendungen bzw. Programme zur Verfügung stellen. Wenn beispielsweise eine höhere Übertragungsgeschwindigkeit erkannt wird, dann können beispielsweise Algorithmen von zum Beispiel Kamerasensoren eventuell dahingehend optimiert werden nicht zu komprimieren, da dies Zeit und Qualität kostet, sondern Daten mit der besten Qualität zu generieren. So ist beispielsweise eine Rohdatenübertragung möglich, wenn beispielsweise eine 10 Gbit/s Ethernet-Verbindung erkannt wird. Eine etwaige Latenz welche beim Komprimieren und Dekomprimieren entstehen würde entfällt dann.

Weiterhin vorteilhaft ist die ausfallsichere Kommunikation. Je nach Medium kann die Redundanz der Software bzw. des Programms oder auch die Datenübertragung angepasst werden. Wird beispielsweise ein langsames Ethernet, beispielsweise 100 Mbit/s, über Kupfer erkannt, dann könnten weitere Methoden zur Redundanz aktiviert werden, um die Wahrscheinlichkeit einer erfolgreichen Datenübertragung zu erhöhen. Wenn zum Beispiel 10 Gbit/s statt 100 Mbit/s Ethernet erkannt werden, ist eventuell eine doppelte Übertragung über redundante Wege nicht notwendig, da die Daten im Fehlerfall neu übertragen werden können. Dies bedeutet, dass weniger Bandbreite im Netzwerk vorgehalten werden muss, also auch Strom eingespart werden kann.

Weiterhin ist ein Vorteil, dass beispielsweise plattformunabhängige Software eingesetzt werden kann. Durch das Verfahren kann das Programm beispielsweise flexibler und präziser auf die Anforderungen des Anwendungsfalls zugeschnitten werden. Wenn heute beispielsweise eine Anwendung für 100 Mbit/s entwickelt wird, dann kann diese auch in einem Ethernet-Bordnetz genutzt werden, welches eine höhere Datenrate aufweist, da das Programm gemäß dem erfindungsgemäßen Verfahren angepasst werden kann.

Vorzugsweise ist es vorgesehen, dass die Art oder physikalisches Medium des Übertragungsmediums einem Programm im Ethernet-Bordnetz mitgeteilt wird und eine Verbindungswegwahl des Programms abhängig von der Art des Übertragungsmediums angepasst wird. Dem Programm kann die Art des Übertragungsmediums entweder mitgeteilt werden oder aber das Programm findet die Art des Übertragungsmediums durch das erfindungsgemäße Verfahren selbst heraus. Mit Kenntnis über das Übertragungsmedium kann das Programm dann eine zuvor getroffene Verbindungswegwahl anpassen oder diese erstmalig bestimmen. Das Programm läuft dabei beispielsweise in der ersten Steuereinheit, in der zweiten Steuereinheit oder in vielfältiger Weise im Ethernet-Bordnetz.

Weiterhin ist es vorzugsweise vorgesehen, dass die Art des Übertragungsmediums als optisch, Kupfer oder drahtlos bestimmt wird. Durch die Bestimmung des Übertragungsmediums als optisch, Kupfer oder drahtlos wird das Übertragungsmedium einer vorbestimmten Klasse zugewiesen. Jeder dieser Klassen kann dann beispielsweise zumindest eine vorbestimmte Eigenschaft zugewiesen sein. So kann optisch beispielsweise für eine geringe Latenz oder eine hohe Geschwindigkeit stehen. Der Klasse drahtlos kann beispielsweise eine höhere Latenz als den anderen beiden Klassen zugeordnet sein.

Weiterhin ist es vorzugsweise vorgesehen, dass dem ersten Verbindungsweg anhand der Art des Übertragungsmediums ein Übertragungssicherheitswert, welcher eine Verlustwahrscheinlichkeit von über den ersten Verbindungsweg übertragenen Daten beschreibt, zugewiesen wird. Durch den übertragenen Sicherheitswert, bleibt es dem Programm erspart, selbst zu bestimmen, welche Eigenschaft das Übertragungsmedium aufweist. So kann dem Programm beispielsweise zusätzlich zur Art des Übertragungsmediums auch der Übertragungssicherheitswert mitgeteilt werden und das Programm kann sofort den Übertragungssicherheitswert weiter verarbeiten und die Verbindungswegwahl anpassen, ohne dass die Art des Übertragungsmediums ausgewertet werden muss.

Weiterhin ist es vorzugsweise vorgesehen, dass Verzögerungen von einer Mehrzahl von Signalen auf dem ersten Verbindungsweg bestimmt werden und die kürzeste Verzögerung der Mehrzahl der Signale ausgewählt wird, wobei die Maximalgeschwindigkeit des ersten Verbindungswegs anhand der kürzesten Verzögerung bestimmt wird. Alternativ oder zusätzlich können Laufzeiten von einer Mehrzahl von Signalen auf dem ersten Verbindungsweg bestimmt werden und die schnellste Laufzeit der Mehrzahl der Signale ausgewählt wird, wobei die Maximalgeschwindigkeit des ersten Verbindungswegs anhand der schnellsten Laufzeit bestimmt wird. Die Verzögerungen oder Laufzeiten der Mehrzahl der Signale haben den Vorteil, dass mehrere Messungen zu einer erhöhten Zuverlässigkeit führen. So kann es beispielsweise sein, dass nur eine einzige Messung mit einem einzigen Signal dazu führt, dass die Art des Übertragungsmediums fehlerhaft bestimmt wird. Durch die Mehrzahl der Signale kann die Maximalgeschwindigkeit und somit die Art oder physikalisches Medium des Übertragungsmediums nochmals zuverlässiger bestimmt werden.

Weiterhin ist es vorzugsweise vorgesehen, dass eine Verzögerungszeit oder Laufzeit eines zweiten Signals auf einem vom ersten Verbindungsweg unterschiedlichen, insbesondere direkten, zweiten Verbindungsweg zwischen der ersten Steuereinheit und der zweiten Steuereinheit bestimmt wird, und eine Maximalgeschwindigkeit des zweiten Verbindungswegs bestimmt wird, wobei die Art des Übertragungsmediums des zweiten Verbindungswegs anhand der Verzögerungszeit oder Laufzeit und Maximalgeschwindigkeit des zweiten Verbindungswegs bestimmt wird. Der zweite Verbindungsweg ist dabei vorzugsweise ein Alternativverbindungsweg zum ersten Verbindungsweg. Vorteilhaft ist, dass nun von dem ersten Verbindungsweg und dem zweiten Verbindungsweg jeweils die Art oder physikalisches Medium des Übertragungsmediums bestimmt wird. Die jeweiligen Arten des Übertragungsmediums werden dann wiederum dem Programm mitgeteilt und das Programm kann abhängig von der Art oder physikalisches Medium des Übertragungsmediums den ersten Verbindungsweg und/oder den zweiten Verbindungsweg zur Datenübertragung auswählen. Es kann auch sein, dass das Programm während der Datenübertragung die Verbindungswege wechselt oder einen weiteren Verbindungsweg hinzunimmt oder weglässt.

Weiterhin ist es vorzugsweise vorgesehen, dass das Verfahren nach einem Wechsel der ersten Steuereinheit und/oder der zweiten Steuereinheit von einem Normalbetriebsmodus in einen Energiesparmodus und/oder vom Energiesparmodus in den Normalbetriebsmodus, insbesondere erneut, ausgeführt wird. Gerade bei unterschiedlichen Betriebsmodi, also vorliegend beim Normalbetriebsmodus und beim Energiesparmodus kommt es vor, dass die Maximalgeschwindigkeit des jeweiligen Verbindungswegs geändert wird. So kann es beispielsweise sein, dass die Maximalgeschwindigkeit im Energiesparmodus niedriger ist als im Normalbetriebsmodus.

Weiterhin ist es vorgesehen, dass die Laufzeit oder Verbindungsverzögerung des ersten Signals mit der ersten Steuereinheit bestimmt wird und eine Laufzeit oder Verbindungsverzögerung eines dritten Signals auf einem nur indirekt mit der ersten Steuereinheit verbundenen dritten Verbindungsweg zwischen der zweiten Steuereinheit und einer dritten Steuereinheit des Ethernet-Bordnetzes mit der dritten Steuereinheit bestimmt wird, wobei die Bestimmung der Verbindungsverzögerung oder Laufzeit des dritten Signals durch eine von der ersten Steuereinheit an die dritte Steuereinheit gesendeten Dienstnachricht ausgelöst wird. Vorteilhaft ist also, dass die dritte Steuereinheit also von der ersten Steuereinheit zur Bestimmung der Verbindungsverzögerung aufgefordert werden kann. Die dritte Steuereinheit muss deshalb nicht selbst dazu eingerichtet sein, die Bestimmung der Verbindungsverzögerung zu einem bestimmten Zeitpunkt oder anhand eines bestimmten Kriteriums anzustoßen bzw. auszulösen. Vorteilhaft ist auch, dass mehrere Steuereinheiten im Ethernet-Bordnetz dazu eingerichtet sind Verbindungsverzögerungen zu bestimmen. Die Verbindungsverzögerung kann dadurch zuverlässiger bestimmt werden.

Die Erfindung umfasst auch eine Steuereinheit für ein Ethernet-Bordnetz. Die Steuereinheit ist als erste Steuereinheit ausgebildet um folgende Schritte durchzuführen:
- ein Signal an eine zweite Steuereinheit des Ethernet-Bordnetzes zu senden und das Signal von der zweiten Steuereinheit zu empfangen;
- eine Laufzeit oder Verzögerung des Signals auf einem, insbesondere direkten, Verbindungsweg zur zweiten Steuereinheit zu bestimmen;
- eine Maximalgeschwindigkeit des Verbindungswegs zu bestimmen; und
- ein Übertragungsmediums des Verbindungswegs anhand der Verbindungsverzögerung und Maximalgeschwindigkeit zu bestimmen.

Die Steuereinheit kann dabei als vielfältige Steuereinheit des Ethernet-Bordnetzes des Kraftfahrzeugs ausgebildet sein. So kann die Steuereinheit beispielsweise zumindest teilweise Funktionen einer Fahrerassistenzeinrichtung des Kraftfahrzeugs übernehmen oder aber zur Steuerung eines Aktors ausgebildet sein oder aber auch nur als Netzwerkweiche ausgebildet sein. Die Steuereinheit kann beispielsweise auch eine Kommunikationssteuereinheit sein, welche zur fahrzeuginternen Kommunikation oder aber auch zur fahrzeugexternen Kommunikation ausgebildet ist.

Weiterhin umfasst die Erfindung ein Ethernet-Bordnetz für ein Kraftfahrzeug mit einer ersten Steuereinheit und einer zweiten Steuereinheit, wobei die Steuereinheiten über zumindest einen Verbindungsweg, insbesondere zumindest auf einem Verbindungsweg direkt, miteinander verbunden sind, und die erste Steuereinheit gemäß der erfindungsgemäßen Steuereinheit ausgebildet ist.

Direkt bedeutet vorliegend, dass zwischen der ersten Steuereinheit und der zweiten Steuereinheit keine weitere Steuereinheit angeordnet ist.

Das Ethernet-Bordnetz ist in einem Kraftfahrzeug angeordnet. Über das Ethernet-Bordnetz können Daten von einem ersten Steuergerät im Ethernet-Bordnetz zu einem zweiten Steuergerät im Ethernet-Bordnetz übertragen werden. So ist das Ethernet-Bordnetz im Kraftfahrzeug insbesondere zur Datenübertragung im Kraftfahrzeug ausgebildet.

Vorzugsweise ist es vorgesehen, dass das Ethernet-Bordnetz eine dritte Steuereinheit aufweist, welche nur indirekt mit der ersten Steuereinheit verbunden ist und über einen dritten Verbindungsweg direkt mit der zweiten Steuereinheit verbunden ist, wobei die dritte Steuereinheit dazu ausgebildet ist, eine Verzögerung oder Laufzeit eines dritten Signals auf dem dritten Verbindungsweg zu bestimmen, wobei die erste Steuereinheit dazu ausgebildet ist, die Bestimmung der Verbindungsverzögerung des dritten Signals durch eine Dienstnachricht an die dritte Steuereinheit auszulösen.

Die mit Bezug auf das erfindungsgemäße Verfahren vorgestellten bevorzugten Ausführungsformen und deren Vorteile gelten entsprechend für die erfindungsgemäße Steuereinheit und das erfindungsgemäße Ethernet-Bordnetz. Die gegenständlichen Merkmale der Steuereinheit und des Ethernet-Bordnetzes sind dazu ausgebildet bei der Ausführung des erfindungsgemäßen Verfahrens mitzuwirken.

Weitere Merkmale der Erfindung ergeben sich aus den Ansprüchen, den Figuren und der Figurenbeschreibung.

Ausführungsbeispiele der Erfindung werden nachfolgend anhand schematischer Zeichnungen näher erläutert.

Es zeigen:
- Fig. 1: eine schematische Draufsicht auf ein Kraftfahrzeug mit einem Ausführungsbeispiel eines erfindungsgemäßen Ethernet-Bordnetzes;
- Fig. 2: eine schematische Darstellung des Ethernet-Bordnetzes mit einer ersten Steuereinheit, einer zweiten Steuereinheit und einer dritten Steuereinheit, welche mit einem ersten Verbindungsweg, einem zweiten Verbindungsweg und einem dritten Verbindungsweg verbunden sind;
- Fig. 3: ein Ablaufdiagramm zur Bestimmung einer Art eines Übertragungsmediums des jeweiligen Verbindungswegs;
- Fig. 4: ein Ablaufdiagramm zur Anpassung eines Programms im Ethernet-Bordnetz;
- Fig. 5: ein Ablaufdiagramm zur Bestimmung und Speicherung einer Laufzeit oder Verbindungsverzögerung eines Signals;
- Fig. 6: ein Ablaufdiagramm zur Erstellung einer Referenzwertliste von Laufzeiten oder Verbindungsverzögerungen; und
- Fig. 7: ein Ablaufdiagramm zur beispielhaften Anpassung eines Programms im Ethernet-Bordnetz.

In den Figuren werden gleiche oder funktionsgleiche Elemente mit den gleichen Bezugszeichen versehen.

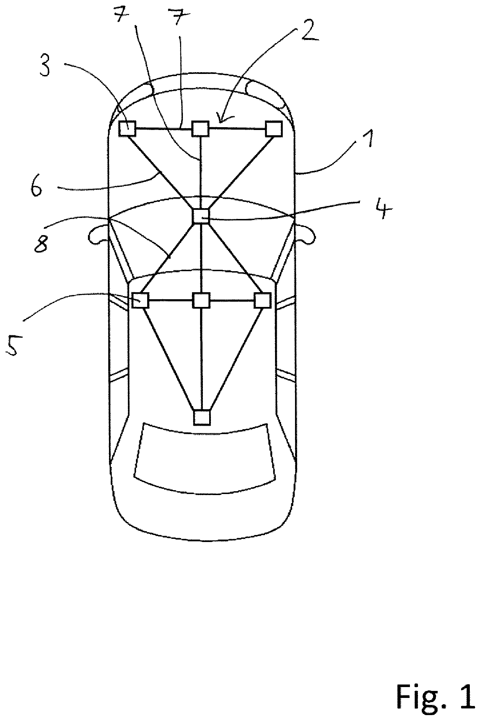

Fig. 1 zeigt ein Kraftfahrzeug 1 in Draufsicht. Das Kraftfahrzeug 1 weist ein Ethernet-Bordnetz 2 auf. Das Ethernet-Bordnetz 2 wiederum weist gemäß dem Ausführungsbeispiel eine Mehrzahl von Steuereinheiten, welche auch als Steuereinrichtungen oder Steuergeräte bezeichnet werden können. Die Steuereinheiten sind dabei mit Verbindungswegen untereinander verbunden. Aufgrund der vorhandenen Topologie des Ethernet-Bordnetzes 2 im Ausführungsbeispiel gibt es mehrere parallele Kommunikationswege zwischen den Steuereinheiten. Die Verbindungswege können beispielsweise aus unterschiedlichen Medientypen bzw. Materialien ausgebildet sein.

Mit Zunahme der Anzahl an Ethernet-Varianten wird beispielsweise auch die dynamische Änderung der Verbindungsgeschwindigkeit Einsatz finden. Das bedeutet beispielsweise, dass zur Laufzeit die Geschwindigkeit geändert werden kann. Beispielsweise kann ein 10 Gbit/s Verbindungsweg auf 100 Mbit/s geändert werden, damit Energie gespart wird. Da es sich dabei um eine dynamische Funktion handelt, kann es sein, dass das Bordnetz nach Auslieferung oder nach Erstmontage im Kraftfahrzeug anders ausgebildet ist als etwa nach einer Softwareaktualisierung oder in einer Fehlsituation.

Das Ethernet-Bordnetz 2 weist eine erste Steuereinheit 3, eine zweite Steuereinheit 4 und eine dritte Steuereinheit 5 auf. Die erste Steuereinheit 3 ist durch einen ersten Verbindungsweg 6 mit der zweiten Steuereinheit 4 verbunden. Weiterhin ist die erste Steuereinheit 3 gemäß dem Ausführungsbeispiel auch durch einen zweiten Verbindungsweg 7 mit der zweiten Steuereinheit 4 verbunden.

Die erste Steuereinheit 3, die zweite Steuereinheit 4 und/oder die dritte Steuereinheit 5 können beispielsweise als Steuergerät oder Netzwerkweiche ausgebildet sein.

Die zweite Steuereinheit 4 und die dritte Steuereinheit 5 sind durch einen dritten Verbindungsweg 8 miteinander verbunden.

Gemäß dem Ausführungsbeispiel von Fig. 1 sind die erste Steuereinheit 3 und die zweite Steuereinheit 4 direkt über den ersten Verbindungsweg 6 miteinander verbunden während die erste Steuereinheit 3 und die zweite Steuereinheit 4 mit dem zweiten Verbindungsweg 7 nur indirekt verbunden sind, da der zweite Verbindungsweg 7 durch eine weitere Steuereinheit in zwei Teile geteilt ist. Gemäß einem anderen Ausführungsbeispiel kann der zweite Verbindungsweg 7 die erste Steuereinheit 3 und die zweite Steuereinheit 4 aber auch direkt miteinander verbinden.

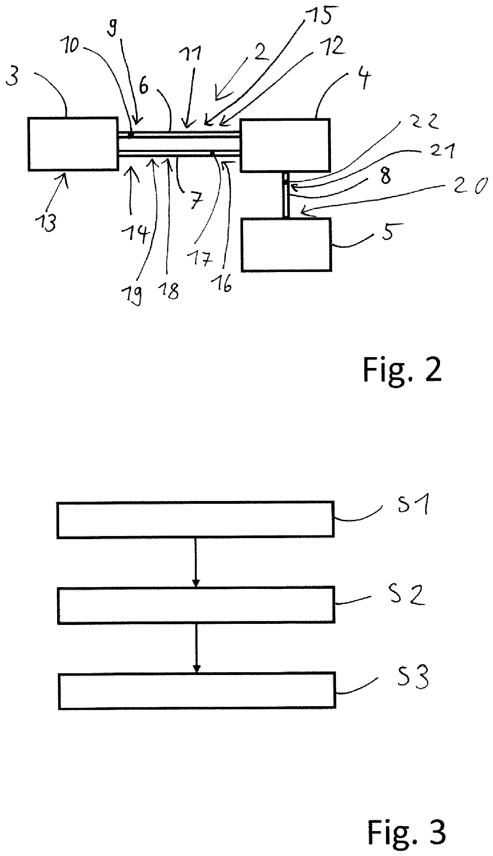

Fig. 2 zeigt ein weiteres Ausführungsbeispiel des Ethernet-Bordnetzes 2. Das Ethernet-Bordnetz 2 weist die erste Steuereinheit 3, die zweite Steuereinheit 4 und die dritte Steuereinheit 5 auf. Weiterhin weist das Ethernet-Bordnetz 2 auch den ersten Verbindungsweg 6, den zweiten Verbindungsweg 7 und den dritten Verbindungsweg 8 auf.

Gemäß dem Ausführungsbeispiel wird eine Laufzeit oder Verzögerung 9 eines ersten Signals 10 auf dem ersten Verbindungsweg 6 bestimmt. Durch die Laufzeit oder Verzögerung 9 wird beschrieben wie lange das erste Signal 10 über den ersten Verbindungsweg 6 von der ersten Steuereinheit 3 zur zweiten Steuereinheit 4 oder umgekehrt unterwegs ist.

Anhand der Laufzeit oder Verzögerung 9 des ersten Signals 10 wird eine Maximalgeschwindigkeit 11 des ersten Verbindungswegs 6 bestimmt. Die Maximalgeschwindigkeit 11 des ersten Verbindungswegs 6 variiert dabei beispielsweise je nach Länge des Kabels, der Geschwindigkeit der Übertragung und/oder des Medientyps bzw. der Art des Übertragungsmediums.

Anhand der Maximalgeschwindigkeit 11 wird eine Art eines Übertragungsmediums 12 des ersten Verbindungswegs 6 bestimmt.

Gemäß dem Ausführungsbeispiel wird die Art des Übertragungsmediums 12 als optisch, Kupfer oder drahtlos bestimmt. Bei optisch ist der erste Verbindungsweg 6 beispielsweise als Glasfaserverbindung ausgebildet. Bei Kupfer ist der erste Verbindungsweg beispielsweise durch Kabel mit verdrillten Adernpaaren, beispielsweise ein Kabel mit verdrillten Adernpaaren ohne Schirm (UTP - Unshielded Twisted Pair), ausgebildet. Bei drahtlos ist der erste Verbindungsweg 6 im Wesentlichen als Funkstrecke ausgebildet und die erste Steuereinheit 3 und/oder die zweite Steuereinheit 4 weisen einen Funkempfänger und/oder Funksender auf bzw. sind damit verbunden.

Die Art oder physikalisches Medium des Übertragungsmediums 12 wird einem Programm 13 im Ethernet-Bordnetz 2 mitgeteilt. Das Programm 13 kann beispielsweise in der ersten Steuereinheit 3, der zweiten Steuereinheit 4 oder der dritten Steuereinheit 5 oder einer weiteren Steuereinheit des Ethernet-Bordnetzes 2 vorhanden sein. Abhängig von der Art oder physikalisches Medium des Übertragungsmediums 12 wird eine Verbindungswegwahl 14 angepasst. So kann das Programm 13 beispielsweise durch die Verbindungswegwahl 14 Daten über einen anderen Verbindungsweg als vor der Verbindungswegwahl senden. Das Programm 13 kann aber beispielsweise auch das Senden von Daten durch die Verbindungswegwahl 14 unterbrechen und zu einem späteren Zeitpunkt wieder aufnehmen.

Gemäß dem Ausführungsbeispiel wird dem ersten Verbindungsweg 6 anhand des Übertragungsmediums 12 ein Übertragungssicherheitswert 15 zugewiesen. Durch den Übertragungssicherheitswert wird eine Verlustwahrscheinlichkeit von über den Verbindungsweg übertragenen Daten beschrieben. Der Übertragungssicherheitswert 15 lässt also eine Aussage zu, wie zuverlässig die Daten über den ersten Verbindungsweg übertragen werden können. Ist beispielsweise ein Sicherheitsgrenzwert unterschritten und die Daten können nur unsicher übertragen werden, so ist damit zu rechnen, dass die Daten verzögert ihr Ziel erreichen oder aber, falls sich ein nochmaliges Senden aufgrund der benötigten Aktualität der Daten nicht lohnt, gar nicht ihr Ziel erreichen.

Gemäß einem weiteren Ausführungsbeispiel werden Verzögerungen von einer Mehrzahl von Signalen auf dem ersten Verbindungsweg 6 bestimmt und die kürzeste Verzögerung der Mehrzahl der Signale wird ausgewählt. Die Maximalgeschwindigkeit 11 des ersten Verbindungswegs 6 wird dann anhand der kürzesten Verzögerung bestimmt.

Analog zu der vorstehend beschriebenen Vorgehensweise kann auch die Art oder physikalisches Medium des Übertragungsmediums 12 für den zweiten Verbindungsweg 7 und oder den dritten Verbindungsweg 8 bestimmt werden.

So kann es auch vorgesehen sein, dass eine Laufzeit oder Verzögerung 16 eines zweiten Signals 17 auf dem zweiten Verbindungsweg 7 bestimmt wird. Es wird dann eine Maximalgeschwindigkeit 18 des zweiten Verbindungswegs 7 anhand der Laufzeit oder Verzögerung 16 des zweiten Signals 17 bestimmt. Anhand der Maximalgeschwindigkeit 18 des zweiten Verbindungswegs 7 wiederum wird das Übertragungsmedium 19 des zweiten Verbindungswegs 7 bestimmt.

Sowohl die erste Steuereinheit 3 als auch die zweite Steuereinheit 4 und auch die dritte Steuereinheit 5 können in einem Normalbetriebsmodus oder in einem Energiesparmodus betrieben werden. Im Energiesparmodus verbraucht die jeweilige Steuereinheit weniger Energie als im Normalbetriebsmodus. Es kann beispielsweise im Energiesparmodus die Geschwindigkeit eines Ports der jeweiligen Steuereinheit gegenüber der Geschwindigkeit im Normalbetriebsmodus reduziert werden. Die reduzierte Geschwindigkeit des Ports hat dann auch Auswirkung auf die jeweilige Maximalgeschwindigkeit des jeweiligen Verbindungswegs.

Gemäß einem weiteren Ausführungsbeispiel kann von der ersten Steuereinheit 3 eine Dienstnachricht 20 an die dritte Steuereinheit 8 gesendet werden. Durch die Dienstnachricht 20 wird dann die Bestimmung einer Laufzeit oder Verzögerung 21 eines dritten Signals 22 ausgelöst. Das dritte Signal 22 wird zwischen der zweiten Steuereinheit 4 und der dritten Steuereinheit 5 gesendet. Die Laufzeit oder Verzögerung 21 des dritten Signals 22 wird gemäß dem Ausführungsbeispiel durch die dritte Steuereinheit 5 bestimmt.

Fig. 3 beschreibt allgemein das Verfahren. In einem Schritt S1 wird die Laufzeit oder Verzögerung 9 des ersten Signals 10 bestimmt. In einem Schritt S2 wird die Art des Übertragungsmediums 12 bestimmt. In einem Schritt S3 wird schließlich das Programm 13 angepasst.

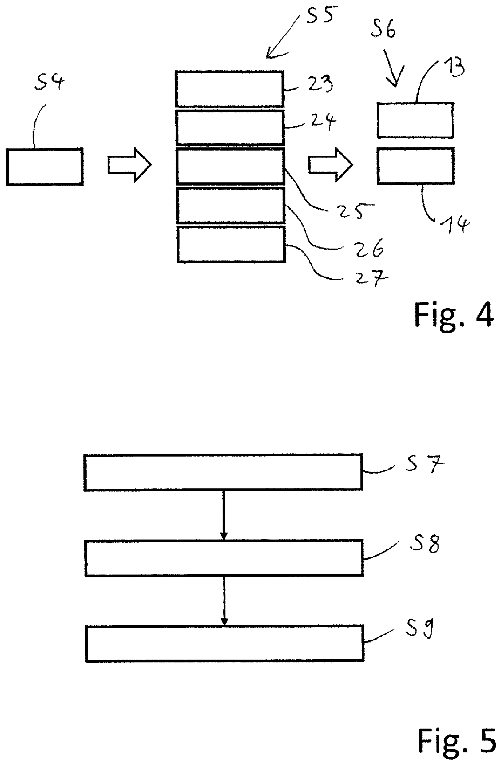

Fig. 4 zeigt ein Ablaufdiagramm zur Berechnung der jeweiligen Parameter bzw. der jeweiligen Parameter, welche demübertragungsmedium 12 zugewiesen sind. In einem Schritt S4 wird die Laufzeit oder Verzögerung 9 des ersten Signals 10 bestimmt. Dadurch kann in einem Schritt S5 die Art oder physikalisches Medium des Übertragungsmediums 12 bestimmt werden. Die Art des Übertragungsmediums 12 kann wiederum folgende Parameter umfassen:
Geschwindigkeit 23, Medium 24, Kabellänge 25, Leistungsübertragung 26, Bitfehlerrate 27. In einem Schritt S6 folgt dann schließlich die Anpassung des Programms 13 und die Verbindungswegwahl 14.

Gemäß dem Ausführungsbeispiel wird vorgeschlagen, zwischen verbundenen Steuereinheiten bzw. Controllern die Verbindungsverzögerung der Signale zu messen. Zum Messen der Verzögerungen 9, 16 und 21 können beispielsweise Methoden des Standards IEEE 1588 oder IEEE 802.1AS (dort "Link Delay" genannt) genutzt werden. Auch durch TTEthernet (time triggered ethernet)können beispielsweise Methoden bereitgestellt werden um die jeweilige Laufzeit oder Verzögerung 9, 16 und 21 zu bestimmen.

Fig. 5 zeigt das Bestimmen der jeweiligen Laufzeit oder Verzögerung 9, 16 und 21. Es wird eine lokale und eine nicht lokale Abfrage der Verbindungsverzögerung beschrieben. Das Programm 13, welches insbesondere auf mindestens einer Steuereinheit ausgeführt wird, bestimmt vorzugsweise erst mal lokal die lokale Verzögerung oder die Verzögerungen, wenn mehr als ein Steuergerät direkt verbunden ist. Danach werden vorzugsweise andere Steuereinheiten über ein serviceorientiertes Verfahren, beispielsweise SOME/IP (Scalable Service-Oriented Middleware over IP) deren Verbindungsverzögerung zu dem Nachbarn abgefragt. Dies kann entweder zentral oder dezentral umgesetzt werden. Die Abfrage kann entweder einmal, bei Systemstart, Definition oder nach Softwareupdate durchgeführt werden oder aber zyklisch ausgeführt werden um dynamische Änderungen zu erkennen. Diese Daten werden dann, insbesondere inklusive der Adressen der Steuereinheiten beim ersten Mal gespeichert und zugeordnet.

In einem Schritt S7 wird die jeweilige Verbindungsverzögerung zu den direkt verbundenen Steuereinheiten bestimmt. In einem Schritt S8 werden die jeweiligen Verzögerungen von anderen Verbindungswegen abgefragt. In einem Schritt S9 werden die jeweiligen Verbindungsverzögerungen und deren zugehörige Verbindungspartner gespeichert.

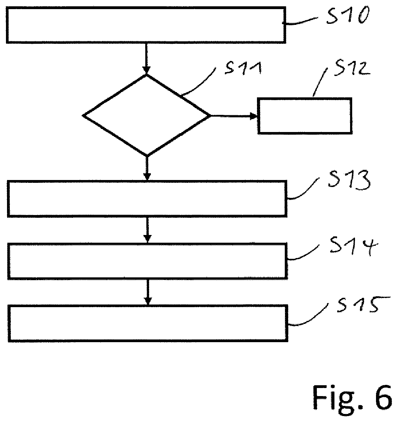

Fig. 6 zeigt ein weiteres Verfahren um auf Basis einer Referenzmessung die anderen Geschwindigkeiten abzuleiten. Wenn beispielsweise die aktuelle Temperatur sehr hoch ist oder schlechte Kabel verwendet werden, dann können vorgespeicherte Werte eventuell zu ungenau sein. Daher wird vorgeschlagen, dass die Anwendung bzw. das Programm 13 an ihrer eigenen Steuereinheit selber Messungen durchführt, insbesondere unter Kenntnis der eigenen Parameter, und anderen Geschwindigkeiten, welche dann daraus abgeleitet und berechnet werden können.

In einem Schritt S10 wird eine Analyse pro lokalem Ethernet-Port durchgeführt. In einem Schritt S11 wird abgefragt, ob Kanalparameter bekannt sind. Ist dies nicht der Fall, so folgt ein Schritt S12 und das Verfahren ist beendet. Ist dies der Fall so folgt ein Schritt S13, in welchem die jeweilige Laufzeit oder Verzögerung 9, 16 und 21 bestimmt wird. In einem Schritt S14 erfolgt die Speicherung und die bestimmte Laufzeit oder Verzögerung wird in Bezug zu den Kanalparametern gesetzt. In einem Schritt S15 wird eine Referenzwertliste erstellt.

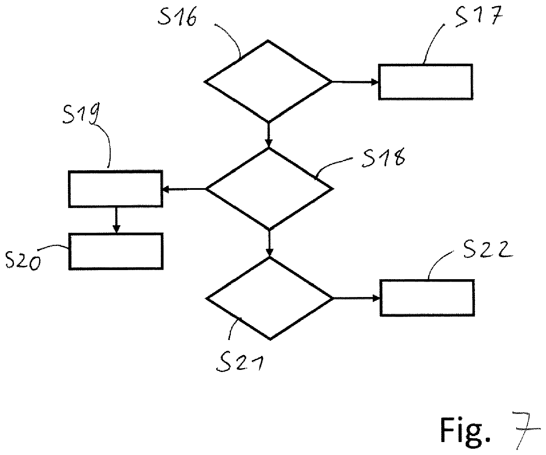

Fig. 7 zeigt eine mögliche Optimierung durch Wissen über die Art des Übertragungsmediums 12, 19. In einem Schritt S16 wird entschieden, ob die Art oder physikalisches Medium des Übertragungsmediums 12, 19 Kupfer ist. Ist dies der Fall, so folgt ein Schritt S17, bei welchem bestätigt wird, dass PoDL (Power over Data Lines), also die Stromversorgung über Ethernet möglich ist.

Wird im Schritt S16 entschieden, dass das Medium nicht Kupfer ist, so folgt ein Schritt S18. Im Schritt S18 wird überprüft, ob das Übertragungsmedium 12 optisch ist. Ist dies der Fall, so folgt ein Schritt S19. Im Schritt S19 wird festgestellt, dass dadurch eine geringere Bitfehlerrate vorliegt und dadurch eine höhere Zuverlässigkeit dieses Verbindungswegs vorliegt. In einem Schritt S20 wird die Möglichkeit gegeben RX (Empfangseinheit) oder TX (Sendeeinheit) der Steuereinheit 3, 4, 5 zu deaktivieren, falls dies nicht benötigt ist.

Wird im Schritt S18 entschieden, dass das Medium bzw. die Art des Übertragungsmediums 12 nicht optisch ist, so wird in einem Schritt S21 davon ausgegangen, dass der jeweilige Verbindungsweg als der betreffende Verbindungsweg als direkte MII-Verbindung (Media Independent Interface) ausgebildet ist. In diesem Fall eignet sich die jeweilige Steuereinheit beispielsweise für IEEE P802.1 CB (Frame Replication and Elimination for Redundancy).

Weitere Möglichkeiten ergeben sich aus dem Wissen über die Übertragungsgeschwindigkeit. Kombiniert mit den aktuellen Datenströmen können beispielsweise Daten gezielt über eine hochbandbreitige Verbindung übertragen werden und somit andere, nicht benötigte Verbindungswege deaktiviert werden, wodurch Energie gespart werden kann.

Außerdem besteht bei hochbandbreitigen Verbindungen die Möglichkeit, Redundanzmechanismen (z.B. IEEE 802.1 CB) zu verwenden. Da die Daten hierbei kontinuierlich redundant übertragen werden, ist dafür eine hohe Bandbreite notwendig. Denkbar ist auch eine Anpassung der Anwendung je nach Geschwindigkeit des Übertragungswegs. Eine Kamera kann beispielsweise je nach Geschwindigkeit des Links bzw. des Verbindungswegs 6, 7, 8 die Auflösung der zu übertragenden Bilddaten anpassen.

### Bezugszeichenliste

- 1: Kraftfahrzeug
- 2: Ethernet-Bordnetz
- 3: erste Steuereinheit
- 4: zweite Steuereinheit
- 5: dritte Steuereinheit
- 6: erster Verbindungsweg
- 7: zweiter Verbindungsweg
- 8: dritter Verbindungsweg
- 9: Verzögerung des ersten Signals
- 10: erstes Signal
- 11: Maximalgeschwindigkeit des ersten Verbindungswegs
- 12: Art des Übertragungsmediums des ersten Verbindungswegs
- 13: Programm
- 14: Verbindungswegwahl
- 15: Übertragungssicherheitswert
- 16: Verzögerung des zweiten Signals
- 17: zweites Signal
- 18: Maximalgeschwindigkeit des zweiten Verbindungswegs
- 19: Art des Übertragungsmediums des zweiten Verbindungswegs
- 20: Dienstnachricht
- 21: Verzögerung des dritten Signals
- 22: drittes Signal
- 23: Geschwindigkeit
- 24: Medium
- 25: Kabellänge
- 26: Leistungsübertragung
- 27: Bitfehlerrate

## Patentansprüche

1. Verfahren zum Betreiben eines Ethernet-Bordnetzes (2) eines Kraftfahrzeugs (1),
**dadurch gekennzeichnet, dass**
bei diesem folgende Schritte durchgeführt werden:
- Bestimmen einer Verbindungsverzögerung(9) eines ersten Signals (10) auf einem ersten Verbindungsweg (6) zwischen einer ersten Steuereinheit (3) des Ethernet-Bordnetzes (2) und einer zweiten Steuereinheit (4) des Ethernet-Bordnetzes (2);
- Bestimmen einer Maximalgeschwindigkeit (11) des ersten Verbindungswegs (6) anhand der Verbindungsverzögerung (9); und
- Bestimmen eines Übertragungsmediums (12) des ersten Verbindungswegs (6) anhand der Verbindungsverzögerung und der Maximalgeschwindigkeit (11).

2. Verfahren nach Anspruch 1,
**dadurch gekennzeichnet, dass**
die Art des Übertragungsmediums (12) einem Programm (13) im Ethernet-Bordnetz (2) mitgeteilt wird und eine Verbindungswegwahl (14) des Programms (13) abhängig von dem Übertragungsmedium (12) angepasst wird.

3. Verfahren nach Anspruch 1 oder 2,
**dadurch gekennzeichnet, dass**
das Übertragungsmedium (12) als optisch, Kupfer oder drahtlos bestimmt wird.

4. Verfahren nach einem der vorhergehenden Ansprüche,
**dadurch gekennzeichnet, dass**
dem ersten Verbindungsweg (6) anhand des Übertragungsmediums (12) ein Übertragungssicherheitswert (15), welcher eine Verlustwahrscheinlichkeit von über den ersten Verbindungsweg (6) übertragenen Daten beschreibt, zugewiesen wird.

5. Verfahren nach einem der vorhergehenden Ansprüche,
**dadurch gekennzeichnet, dass**
Verzögerungen von einer Mehrzahl von Signalen auf dem ersten Verbindungsweg (6) bestimmt werden und die kürzeste Verzögerung der Mehrzahl der Signale ausgewählt wird, wobei die Maximalgeschwindigkeit (11) des ersten Verbindungswegs (6) anhand der kürzesten Verzögerung bestimmt wird.

6. Verfahren nach einem der vorhergehenden Ansprüche,
**dadurch gekennzeichnet, dass**
eine Verzögerung (16) eines zweiten Signals (17) auf einem vom ersten Verbindungsweg (6) unterschiedlichen zweiten Verbindungsweg (7) zwischen der ersten Steuereinheit (3) und der zweiten Steuereinheit (4) bestimmt wird, und eine Maximalgeschwindigkeit (11) des zweiten Verbindungswegs (7) bestimmt wird, wobei das Übertragungsmedium (19) des zweiten Verbindungswegs (7) anhand der Verzögerung und Maximalgeschwindigkeit (11) des zweiten Verbindungswegs (7) bestimmt wird.

7. Verfahren nach einem der vorhergehenden Ansprüche,
**dadurch gekennzeichnet, dass**
das Verfahren nach einem Wechsel der ersten Steuereinheit (3) von einem Normalbetriebsmodus in einen Energiesparmodus und/oder vom Energiesparmodus in den Normalbetriebsmodus ausgeführt wird.

8. Verfahren nach einem der vorhergehenden Ansprüche,
**dadurch gekennzeichnet, dass**
die Verbindungsverzögerung (9) des ersten Signals (10) mit der ersten Steuereinheit (3) bestimmt wird und eine Verzögerung (21) eines dritten Signals (22) auf einem nur indirekt mit der ersten Steuereinheit (3) verbundenen dritten Verbindungsweg (8) zwischen der zweiten Steuereinheit (4) und einer dritten Steuereinheit (5) des Ethernet-Bordnetzes (2) mit der dritten Steuereinheit (5) bestimmt wird, wobei die Bestimmung der Verbindungsverzögerung (21) des dritten Signals (22) durch eine von der ersten Steuereinheit (3) an die dritte Steuereinheit (5) gesendete Dienstnachricht (20) ausgelöst wird.

9. Steuereinheit für ein Ethernet-Bordnetz (2),
**dadurch gekennzeichnet, dass** sie als erste Steuereinheit (3) dazu ausgebildet ist:
- ein Signal (10) an eine zweite Steuereinheit (4) des Ethernet-Bordnetzes (2) zu senden und das Signal (10) von der zweiten Steuereinheit (4) zu empfangen;
- eine Verbindungsverzögerung (9) des Signals (10) auf einem Verbindungsweg (6) zur zweiten Steuereinheit (4) zu bestimmen;
- eine Maximalgeschwindigkeit (11) des Verbindungswegs (6) anhand der Verbindungsverzögerung (9) zu bestimmen; und
- ein Übertragungsmedium (12) des Verbindungswegs (6) anhand der Verbindungsverzögerung und Maximalgeschwindigkeit (11) zu bestimmen.

10. Ethernet-Bordnetz (2) für ein Kraftfahrzeug (1), mit einer ersten Steuereinheit (3) und einer zweiten Steuereinheit (4), wobei die Steuereinheiten (3, 4) über zumindest einen Verbindungsweg (6, 7) miteinander verbunden sind, und die erste Steuereinheit (3) gemäß Anspruch 9 ausgebildet ist.

11. Ethernet-Bordnetz nach Anspruch 10,
**dadurch gekennzeichnet, dass**
das Ethernet-Bordnetz (2) eine dritte Steuereinheit (5) aufweist, welche nur indirekt mit der ersten Steuereinheit (3) verbunden ist und über einen dritten Verbindungsweg (8) direkt mit der zweiten Steuereinheit (4) verbunden ist, wobei die dritte Steuereinheit (5) dazu ausgebildet ist, eine Verzögerung (21) eines dritten Signals (22) auf dem dritten Verbindungsweg (8) zu bestimmen, wobei die erste Steuereinheit (3) dazu ausgebildet ist, die Bestimmung der Verbindungsverzögerung (21) des dritten Signals (22) durch eine Dienstnachricht (20) an die dritte Steuereinheit (5) auszulösen.

## Claims

1. Method for operating an Ethernet on-board electrical system (2) of a motor vehicle (1),
**characterized in that**
the following steps are carried out in said method:
- determining a connection delay (9) of a first signal (10) on a first connection path (6) between a first control unit (3) of the Ethernet on-board electrical system (2) and a second control unit (4) of the Ethernet on-board electrical system (2);
- determining a maximum speed (11) of the first connection path (6) on the basis of the connection delay (9); and
- determining a transmission medium (12) of the first connection path (6) on the basis of the connection delay and the maximum speed (11).

2. Method according to Claim 1,
**characterized in that**
the type of transmission medium (12) is communicated to a program (13) in the Ethernet on-board electrical system (2) and a connection path selection (14) of the program (13) is adapted on the basis of the transmission medium (12).

3. Method according to Claim 1 or 2,
**characterized in that**
the transmission medium (12) is defined as optical, copper or wireless.

4. Method according to one of the preceding claims,
**characterized in that**
a transmission reliability value (15), which describes a loss probability of data transmitted via the first connection path (6), is assigned to the first connection path (6) on the basis of the transmission medium (12).

5. Method according to one of the preceding claims,
**characterized in that**
delays of a plurality of signals on the first connection path (6) are determined and the shortest delay of the plurality of signals is selected, wherein the maximum speed (11) of the first connection path (6) is determined on the basis of the shortest delay.

6. Method according to one of the preceding claims,
**characterized in that**
a delay (16) of a second signal (17) on a second connection path (7), which differs from the first connection path (6), between the first control unit (3) and the second control unit (4) is determined, and a maximum speed (11) of the second connection path (7) is determined, wherein the transmission medium (19) of the second connection path (7) is determined on the basis of the delay and maximum speed (11) of the second connection path (7).

7. Method according to one of the preceding claims,
**characterized in that**
the method is carried out after a change of the first control unit (3) from a normal operating mode into an energy-saving mode and/or from the energy-saving mode into the normal operating mode.

8. Method according to one of the preceding claims,
**characterized in that**
the connection delay (9) of the first signal (10) is determined using the first control unit (3) and a delay (21) of a third signal (22) on a third connection path (8), which is connected only indirectly to the first control unit (3), between the second control unit (4) and a third control unit (5) of the Ethernet on-board electrical system (2) is determined using the third control unit (5), wherein the determination of the connection delay (21) of the third signal (22) is triggered by means of a service message (20) transmitted from the first control unit (3) to the third control unit (5).

9. Control unit for an Ethernet on-board electrical system (2),
**characterized in that**, as a first control unit (3), it is designed:
- to transmit a signal (10) to a second control unit (4) of the Ethernet on-board electrical system (2) and to receive the signal (10) from the second control unit (4);
- to determine a connection delay (9) of the signal (10) on a connection path (6) to the second control unit (4);
- to determine a maximum speed (11) of the connection path (6) on the basis of the connection delay (9); and
- to determine a transmission medium (12) of the connection path (6) on the basis of the connection delay and the maximum speed (11).

10. Ethernet on-board electrical system (2) for a motor vehicle (1), having a first control unit (3) and a second control unit (4), wherein the control units (3, 4) are connected to one another via at least one connection path (6, 7), and the first control unit (3) is designed according to Claim 9.

11. Ethernet on-board electrical system according to Claim 10,
**characterized in that**
the Ethernet on-board electrical system (2) has a third control unit (5) which is only indirectly connected to the first control unit (3) and is directly connected to the second control unit (4) via a third connection path (8), wherein the third control unit (5) is designed to determine a delay (21) of a third signal (22) on the third connection path (8), wherein the first control unit (3) is designed to trigger the determination of the connection delay (21) of the third signal (22) by means of a service message (20) to the third control unit (5).

## Revendications

1. Procédé permettant de faire fonctionner un réseau de bord Ethernet (2) d'un véhicule automobile (1), **caractérisé en ce que** dans le cadre de celui-ci les étapes suivantes sont effectuées consistant à :
- déterminer un retard de liaison (9) d'un premier signal (10) sur une première voie de liaison (6) entre une première unité de commande (3) du réseau de bord Ethernet (2) et une deuxième unité de commande (4) du réseau de bord Ethernet (2) ;
- déterminer une vitesse maximale (11) de la première voie de liaison (6) à l'aide du retard de liaison (9) ; et
- déterminer un support de transmission (12) de la première voie de liaison (6) à l'aide du retard de liaison et de la vitesse maximale (11).

2. Procédé selon la revendication 1, **caractérisé en ce que** le type du support de transmission (12) est communiqué à un programme (13) dans le réseau de bord Ethernet (2), et un choix de voie de liaison (14) du programme (13) est adapté en fonction du support de transmission (12).

3. Procédé selon la revendication 1 ou 2, **caractérisé en ce que** le support de transmission (12) est déterminé comme étant optique, en cuivre ou sans fil.

4. Procédé selon l'une quelconque des revendications précédentes, **caractérisé en ce qu'**une valeur de fiabilité de transmission (15), qui décrit une probabilité de perte de données transmises par la première voie de liaison (6), est attribuée à la première voie de liaison (6) à l'aide du support de transmission (12).

5. Procédé selon l'une quelconque des revendications précédentes, **caractérisé en ce que** des retards d'une pluralité de signaux sur la première voie de liaison (6) sont déterminés, et le retard le plus court de la pluralité de signaux est sélectionné, la vitesse maximale (11) de la première voie de liaison (6) étant déterminée à l'aide du retard le plus court.

6. Procédé selon l'une quelconque des revendications précédentes, **caractérisé en ce qu'**un retard (16) d'un deuxième signal (17) sur une deuxième voie de liaison (7) différente de la première voie de liaison (6) entre la première unité de commande (3) et la deuxième unité de commande (4) est déterminé, et une vitesse maximale (11) de la deuxième voie de liaison (7) est déterminée, le support de transmission (19) de la deuxième voie de liaison (7) étant déterminé à l'aide du retard de la vitesse maximale (11) de la deuxième voie de liaison (7).

7. Procédé selon l'une quelconque des revendications précédentes, **caractérisé en ce que** le procédé est effectué après un passage de la première unité de commande (3) d'un mode de fonctionnement normal à un mode d'économie d'énergie et/ou du mode d'économie d'énergie au mode de fonctionnement normal.

8. Procédé selon l'une quelconque des revendications précédentes, **caractérisé en ce que** le retard de liaison (9) du premier signal (10) est déterminé par la première unité de commande (3), et un retard (21) d'un troisième signal (22) sur une troisième voie de liaison (8) reliée indirectement seulement à la première unité de commande (3) entre la deuxième unité de commande (4) et une troisième unité de commande (5) du réseau de bord Ethernet (2) est déterminé par la troisième unité de commande (5), la détermination du retard de liaison (21) du troisième signal (22) étant déclenchée par un message de service (20) envoyé de la première unité de commande (3) à la troisième unité de commande (5).

9. Unité de commande pour un réseau de bord Ethernet (2), **caractérisée en ce que** comme première unité de commande (3), elle est réalisée pour
- envoyer un signal (10) à une deuxième unité de commande (4) du réseau de bord Ethernet (2) et recevoir le signal (10) de la deuxième unité de commande (4) ;
- déterminer un retard de liaison (9) du signal (10) sur une voie de liaison (6) jusqu'à la deuxième unité de commande (4) ;
- déterminer une vitesse maximale (11) de la voie de liaison (6) à l'aide du retard de liaison (9) ; et
- déterminer un support de transmission (12) de la voie de liaison (6) à l'aide du retard de liaison et de la vitesse maximale (11).

10. Réseau de bord Ethernet (2) pour un véhicule automobile (1), comprenant une première unité de commande (3) et une deuxième unité de commande (4), les unités de commande (3, 4) étant reliées l'une à l'autre par au moins une voie de liaison (6, 7), et la première unité de commande (3) étant réalisée selon la revendication 9.

11. Réseau de bord Ethernet selon la revendication 10, **caractérisé en ce que** le réseau de bord Ethernet (2) présente une troisième unité de commande (5) qui n'est reliée qu'indirectement à la première unité de commande (3) et est reliée par une troisième voie de liaison (8) directement à la deuxième unité de commande (4), la troisième unité de commande (5) étant réalisée pour déterminer un retard (21) d'un troisième signal (22) sur la troisième voie de liaison (8), la première unité de commande (3) étant réalisée pour déclencher la détermination du retard de liaison (21) du troisième signal (22) par un message de service (20) destiné à la troisième unité de commande (5).
